# FASCICULE DE BREVET EUROPEEN

(11) **EP 2 879 998 B1**
(45) Date de publication et mention de la délivrance du brevet: **20.01.2021**
(21) Numéro de dépôt: 13745607.5
(22) Date de dépôt: 23.07.2013
(51) Int. Cl.: C03B 9/36

(54) **PROCÉDÉ ET INSTALLATION DE FABRICATION D'UN ARTICLE CREUX EN VERRE PRÉSENTANT UNE RÉPARTITION INTÉRIEURE DE VERRE SPÉCIFIQUE**
VERFAHREN UND VORRICHTUNG ZUR HERSTELLUNG VON HOHLEN GLASKÖRPERN MIT SPEZIFISCHER INNERER GLASVERTEILUNG
METHOD AND EQUIPMENT FOR MANUFACTURING A HOLLOW GLASS ARTICLE HAVING A SPECIFIC INNER GLASS DISTRIBUTION

(30) Priorité: 30.07.2012 FR 1257378
(43) Date de publication de la demande: 10.06.2015
(73) Titulaire: Pochet du Courval, 75010 Paris (FR)
(72) Inventeur: MAYEU, Patrice, F-76340 Blangy-sur-Bresle (FR); GUEROUT, Sébastien, F-76340 Monchaux Soreng (FR)
(74) Mandataire: Lavoix
(86) Numéro de dépôt international: PCT/EP2013/065527
(87) Numéro de publication internationale: WO 2014/019893

(56) Documents cités:
- WO-A1-2006/027683
- DE-A1- 10 310 990
- DE-B- 1 054 670
- DE-C- 596 276
- US-A- 3 468 648
- US-A1- 2011 067 449
- US-A1- 2011 154 859
- US-B1- 6 923 022

## Description

La présente invention concerne un procédé de fabrication d'un article creux en verre dans lequel :
- on introduit une ébauche de l'article dans un moule finisseur, et
- on forme dans le moule finisseur l'article, par injection au moins d'un gaz à une pression de formation à l'intérieur de l'ébauche de l'article.

On décrit également un article creux en verre obtenu par un tel procédé de fabrication, comme par exemple un flacon ou tout autre article de ce type, un tel article ou flacon ne faisant pas partie de l'invention.

La présente invention concerne également une installation de fabrication d'un article creux en verre comprenant :
- des moyens d'introduction d'une ébauche de l'article dans une empreinte d'un moule finisseur, et
- des moyens de formation dans le moule finisseur de l'article, lesdits moyens de formation étant propres à injecter au moins un gaz à une pression de formation à l'intérieur de l'ébauche de l'article.

D'une manière générale, la fabrication d'articles creux en verre, comme par exemple les flacons, doit répondre à des contraintes diverses, et notamment à des contraintes de forme, par exemple la position du col, des contraintes d'outillages de fabrication, par exemple pour le démoulage, des contraintes de répartition du verre et de poids du verre et des contraintes spécifiques liées au conditionnement.

Un procédé connu de fabrication de ce type d'articles consiste à introduire dans un moule finisseur une ébauche de l'article à une température déterminée, l'ébauche étant préalablement obtenue soit par soufflage soit par pressage dans un moule ébaucheur, et à former l'article dans ce moule finisseur en injectant, à une pression donnée, un gaz sous pression comme par exemple de l'air, afin de plaquer le verre contre les parois du moule finisseur.

Il est important que le formage de ce type d'articles creux en verre, et plus particulièrement les flacons destinés à la parfumerie et à la cosmétique, se fasse rapidement afin d'avoir des cadences de production acceptables. A cet effet, ce type d'articles est réalisé jusqu'à présent avec des répartitions intérieures de verre standard. Il existe généralement trois modèles de répartition intérieure standard : le modèle « marloquette » ou « chapeau de gendarme », le modèle « gouttes d'eau » et le modèle « plat ».

Il est par ailleurs connu de réaliser sur les parois et/ou sur le fond de ce type d'article des répartitions extérieures de verre spécifiques, par exemple en utilisant un moule finisseur présentant une empreinte spécifique, ou encore à l'aide de poinçons, afin de conférer une forme extérieure particulière au flacon.

Toutefois, du fait notamment des contraintes de forme évoquées précédemment, ces procédés industriels ne sont pas applicables en l'état pour obtenir un article creux présentant une répartition intérieure de verre spécifique, différente des trois répartitions standards précitées, et ainsi permettre de « sculpter » l'intérieur du flacon afin de lui conférer une esthétique particulière.

US 2011/067449 A1, US 3 468 648 A, DE 596 276 C, US 6 923 022 B et DE 10 54 670 B décrivent des procédés mettant en oeuvre un tube de soufflage fixe et ne permettent pas d'obtenir une répartition intérieure de verre spécifique.

WO 2006/027683 A1 décrit un procédé visant une répartition uniforme du verre contre la paroi du moule.

US 2011/154859 A1 et DE 103 10 990 A1 s'intéressent au refroidissement de l'article en verre par injection d'air et ne divulguent pas l'obtention d'une répartition intérieure de verre spécifique.Un des buts de l'invention est donc de proposer un procédé et une installation de fabrication d'un article creux permettant d'obtenir un article creux présentant une répartition intérieure de verre spécifique et personnalisable, tout en conservant des cadences de production acceptables.

A cet effet, l'invention a pour objet un procédé selon la revendication 1.

Le fait d'injecter le gaz à une pression de finition particulière en des zones particulières de l'intérieur de l'article creux permet de conférer à ces zones une forme particulière et d'obtenir ainsi un article creux dont l'intérieur est « sculpté ».

Suivant d'autres aspects avantageux de l'invention, le procédé de fabrication comprend une ou plusieurs des caractéristiques suivantes, prises isolément ou suivant toutes les combinaisons techniquement possibles :
- au cours de la formation de l'article dans le moule finisseur, on déplace par translation longitudinale le ou chaque point d'injection du gaz pour diriger le gaz vers certaines zones discrètement réparties de l'ébauche, au moins entre une première position d'injection du gaz à l'intérieur de l'ébauche et une deuxième position d'injection du gaz à l'intérieur de l'ébauche ;
- au cours de la formation de l'article dans le moule finisseur, on déplace par rotation le ou chaque point d'injection du gaz pour diriger le gaz vers certaines zones discrètement réparties de l'ébauche ;
- au cours de la formation de l'article dans le moule finisseur, on évacue une partie du gaz injecté vers l'extérieur du moule finisseur ;
- au cours de la formation de l'article dans le moule finisseur, on applique au gaz injecté au moins à la pression de finition un profil de pressions s'étendant entre une pression minimale sensiblement égale à 3 bars et une pression maximale sensiblement égale à 7 bars ;
- le procédé comprend en outre, avant l'introduction d'une ébauche de l'article dans un moule finisseur, les étapes suivantes :
   - introduire dans un moule ébaucheur au moins une paraison de verre fondu, et
   - former dans le moule ébaucheur l'ébauche de l'article à partir de ladite au moins une paraison ;
- au cours de la formation de l'article dans le moule finisseur, on déplace le ou chaque point d'injection du gaz par rapport à l'ébauche.

On décrit un article creux en verre obtenu par un tel procédé de fabrication, l'article creux présentant une répartition intérieure de verre spécifique.

L'invention a également pour objet une installation de fabrication selon la revendication 8.

Suivant d'autres aspects avantageux de l'invention, l'installation de fabrication comprend une ou plusieurs des caractéristiques suivantes, prises isolément ou suivant toutes les combinaisons techniquement possibles :
- la buse d'injection est montée mobile en translation longitudinale au moins entre une première position d'injection du gaz à l'intérieur de l'ébauche, et une deuxième position d'injection du gaz à l'intérieur de l'ébauche ;
- la buse d'injection est montée mobile en rotation autour de son axe longitudinal ;
- lesdits au moins deux orifices présentant des formes et/ou des diamètres différents ;
- les moyens de formation comprennent au moins une ouverture d'évacuation du gaz vers l'extérieur du moule finisseur ;
- l'installation comprend en outre des moyens d'application d'un profil de pressions au gaz injecté au moins à la pression de finition, ledit profil de pressions s'étendant entre

une pression minimale sensiblement égale à 3 bars et une pression maximale sensiblement égale à 7 bars ;
- l'installation comprend en outre au moins un distributeur de paraisons de verre fondu, un moule ébaucheur comportant une empreinte destinée à recevoir successivement au moins une paraison de verre fondu, et des moyens de formation dans le moule ébaucheur de l'ébauche de l'article ;
- les moyens de déplacement d'au moins un point d'injection du gaz sont aptes en outre à déplacer le ou chaque point d'injection par rapport à l'ébauche.

D'autres aspects et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'une partie d'une première installation de fabrication d'un article creux en verre, selon l'invention, comprenant un moule finisseur et une tête de soufflage ;
- la figure 2 est une vue schématique en coupe verticale du moule finisseur et de la tête de soufflage de la figure 1, la tête de soufflage comprenant une buse d'injection ;
- la figure 3 est une vue schématique en coupe verticale du moule finisseur et de la tête de soufflage de la figure 2, dans une première position de la buse d'injection dans une ébauche de l'article ;
- la figure 4 est une vue analogue à la figure 3, dans une deuxième position de la buse d'injection dans l'ébauche ;
- la figure 5 est une vue analogue à la figure 3, représentant un article creux en verre formé dans le moule finisseur ;
- la figure 6 est une vue schématique en perspective de l'article creux en verre définitif ;
- la figure 7 est une vue schématique en perspective d'un article creux en verre obtenu par un procédé de fabrication de l'art antérieur ; et
- la figure 8 est une vue analogue à la figure 2 d'une buse d'injection d'une deuxième installation de fabrication selon l'invention.

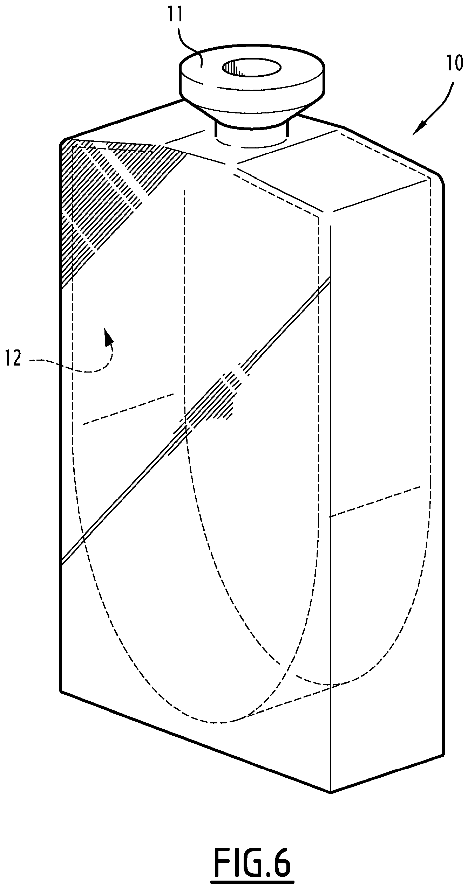

Dans ce qui suit, l'installation pour la mise en œuvre du procédé selon l'invention sera décrite pour la fabrication d'un article creux 10 en verre. L'article creux 10 est par exemple un flacon de forme générale parallélépipédique, comprenant une bague 11 de diamètre intérieur de préférence compris entre 3 mm et 13 mm, comme montré à la figure 6.

En variante non représentée, l'article creux 10 est un pot. Le pot présente par exemple un diamètre intérieur inférieur à 105 mm.

L'article creux 10 présente une répartition intérieure 12 de verre. Par répartition intérieure de verre on entend une forme particulière de la paroi interne du flacon due à une variation de l'épaisseur de verre entre la paroi externe et la paroi interne du flacon. Par paroi interne du flacon on entend la paroi interne des côtés, la paroi interne des épaules et la paroi interne du fond du flacon.

Bien évidemment, cette installation permet également la fabrication d'articles creux de formes diverses.

Dans la suite de la description, les termes "longitudinal" et "transversal" sont définis comme suit : la direction longitudinale correspond à la hauteur de l'article creux et la direction transversale correspond à toute direction perpendiculaire à la hauteur de l'article creux. On définit par ailleurs les termes « amont » et « aval » par rapport à la direction d'écoulement du gaz sous pression.

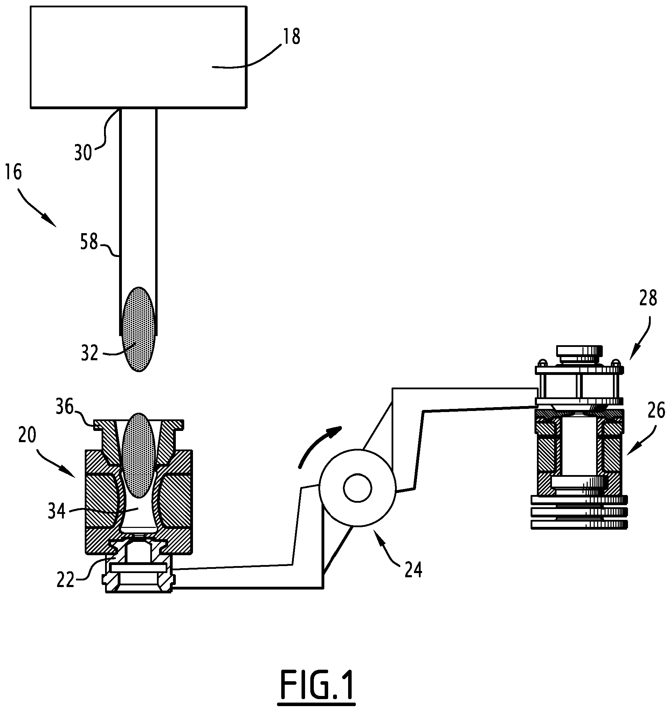

Une première installation 16 de fabrication de l'article creux 10 est représentée sur la figure 1. L'installation 16 comprend un distributeur 18 de verre fondu placé en sortie d'un four, non représenté, un moule ébaucheur 20 et un organe 22 de soufflage d'un premier gaz sous pression à l'intérieur du moule ébaucheur 20. Le premier gaz sous pression est par exemple de l'air et l'organe de soufflage 22 est relié à un dispositif d'alimentation en air, non représenté.

L'installation 16 comprend en outre un bras manipulateur 24, un moule finisseur 26 et une tête 28 de soufflage d'au moins un deuxième gaz sous pression à l'intérieur du moule finisseur 26. Le deuxième gaz sous pression est par exemple de l'air.

Le distributeur 18, de type connu, est propre à délivrer à la sortie d'un orifice de coulée 30, au moins une paraison 32 de verre fondu.

Le moule ébaucheur 20 comporte une empreinte 34 destinée à recevoir la paraison 32. A cet effet, l'empreinte 34 comporte, au niveau de son entrée, un entonnoir 36.

Comme connu en soi, l'organe de soufflage 22 est propre à injecter l'air sous pression à l'intérieur du moule ébaucheur 20 pour former une ébauche 38 de l'article 10. Plus particulièrement, l'organe de soufflage 22 est propre à injecter l'air pour compresser le verre, à former sur l'ébauche 38 la bague 11 et à façonner le fond de l'ébauche 38.

En variante, le moule ébaucheur 20 et l'organe de soufflage 22 sont remplacés par un organe de pressage de verre fondu.

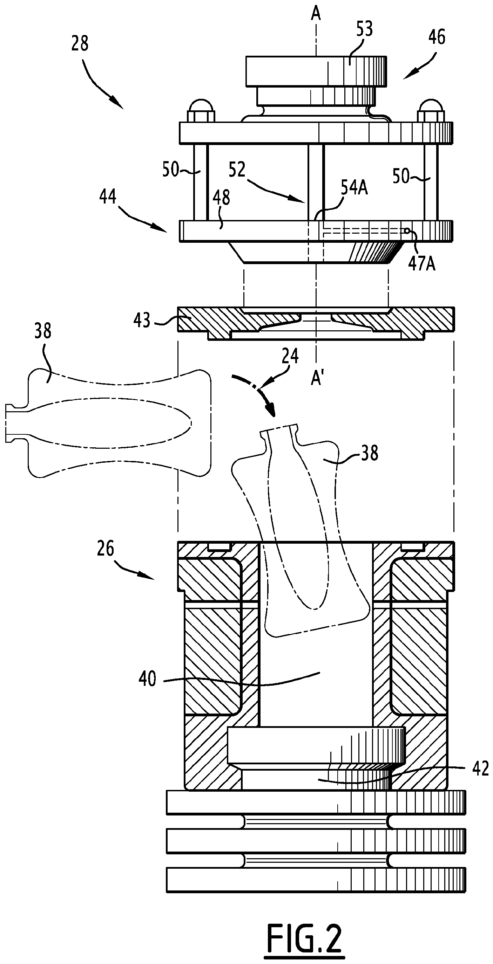

Comme cela apparaît sur les figures 1 et 2, le bras manipulateur 24 est propre à démouler l'ébauche 38 du moule ébaucheur 20, puis à transférer l'ébauche 38 depuis le moule ébaucheur 20 jusqu'au moule finisseur 26.

Comme illustré sur la figure 2, le moule finisseur 26 comporte une empreinte 40 dont la partie inférieure est propre à être obturée par un fond amovible 42, et dont la partie supérieure est propre à être obturée par un couvercle amovible 43.

La tête de soufflage 28 comporte un support amovible 44 et un organe 46 d'injection du deuxième gaz sous pression, monté mobile par rapport au support 44. La tête de soufflage 28 comporte en outre un système mécanique de déplacement de l'organe d'injection 46 par rapport au support 44, non représenté sur les figures. En outre, la tête de soufflage 28 comporte avantageusement au moins une ouverture 47 d'évacuation du deuxième gaz sous pression vers l'extérieur du moule finisseur 26. Dans l'exemple de réalisation des figures 2 à 5, la tête de soufflage 28 comprend une ouverture 47A d'évacuation du deuxième gaz sous pression vers l'extérieur du moule finisseur 26. L'ouverture 47A présente une forme circulaire. En variante, l'ouverture 47A présente une forme différente de la forme circulaire. En variante encore, la tête de soufflage 28 ne comporte pas d'ouverture d'évacuation 47.

Le support 44 comprend par exemple un bâti transversal 48 et deux tiges de guidage 50 fixées au bâti 48. Le bâti transversal 48 présente une partie inférieure dont la forme est complémentaire de celle de la partie supérieure du couvercle amovible 43. Dans l'exemple de réalisation des figures 2 à 5, le support 44 est propre à être rapporté sur le couvercle amovible 43, par emboitement du bâti transversal 48 sur le couvercle amovible 43.

L'organe d'injection 46 est monté coulissant le long des deux tiges de guidage 50, au moins entre une première position, dans laquelle le deuxième gaz est injecté à l'intérieur de l'ébauche 38, et une deuxième position.

L'organe d'injection 46 comporte une buse 52 d'injection au moins du deuxième gaz sous pression vers au moins une zone prédéfinie de l'ébauche 38. L'organe d'injection 46 comporte également un dispositif d'alimentation en air relié à la buse 52, non représenté sur les figures, et un dispositif 53 d'application d'un profil de pressions au deuxième gaz sous pression, relié à la buse 52.

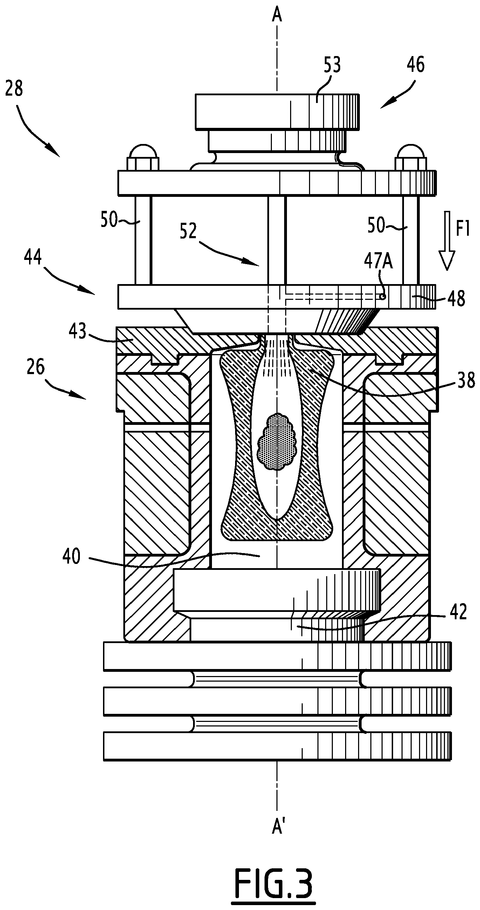

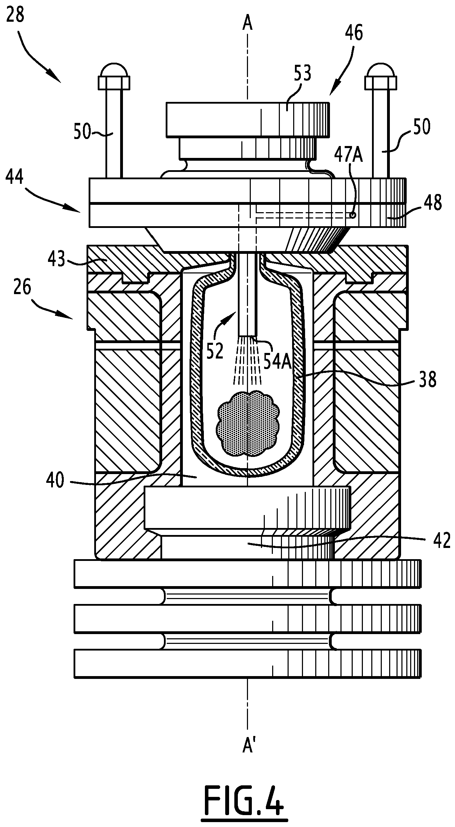

La buse d'injection 52 s'étend selon un axe longitudinal A-A' et est montée mobile en translation longitudinale par rapport au support 44, entre une position rétractée, illustrée sur la figure 3 et correspondant à la première position de l'organe d'injection 46, et une position insérée, illustrée sur la figure 4 et correspondant à la deuxième position de l'organe d'injection 46.

La buse d'injection 52 comprend au moins un orifice 54 de sortie du deuxième gaz sous pression à l'intérieur du moule finisseur 26. Dans l'exemple de réalisation des figures 2 à 4, la buse d'injection 52 comprend un orifice 54A de sortie du deuxième gaz sous pression à l'intérieur du moule finisseur 26. L'orifice 54A forme un point d'injection du deuxième gaz sous pression à l'intérieur du moule finisseur 26. L'orifice 54A présente une forme circulaire et s'étend à l'extrémité aval de la buse 52.

En variante, l'orifice 54A présente une forme différente de la forme circulaire. En variante encore, l'orifice 54 s'étend sur une paroi latérale de la buse d'injection 52.

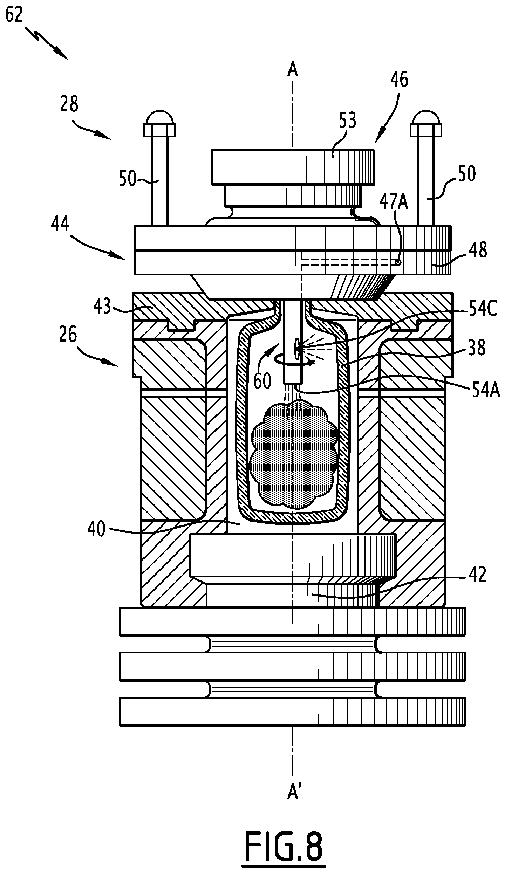

En variante, la buse d'injection 52 comprend au moins deux orifices 54 de sortie du deuxième gaz sous pression à l'intérieur du moule finisseur 26, comme illustré sur la figure 8. Selon cette variante, au moins deux des orifices de sortie 54 présentent avantageusement des formes et/ou des diamètres différents. Chaque orifice de sortie 54 s'étend à l'extrémité aval ou sur une paroi latérale de la buse d'injection 52. Ceci permet d'obtenir une injection du deuxième gaz dans le moule finisseur 26 parallèlement à la direction d'écoulement du deuxième gaz dans la buse 52 et/ou inclinée d'un angle par rapport à cette direction d'écoulement, par exemple d'un angle sensiblement égal à 90 degrés.

En outre, la buse d'injection 52 comprend avantageusement au moins une ouverture 56 d'évacuation du deuxième gaz sous pression vers l'extérieur du moule finisseur 26. Dans l'exemple de réalisation des figures 2 à 4, la buse d'injection 52 comprend une ouverture circulaire 56A d'évacuation du deuxième gaz sous pression vers l'extérieur du moule finisseur 26.

Dans sa position rétractée, la buse d'injection 52 est propre à injecter le deuxième gaz sous pression à l'intérieur de l'ébauche 38. Dans sa position insérée, dans laquelle la buse 52 est insérée à l'intérieur du moule finisseur 26 et de l'ébauche 38, la buse 52 est avantageusement propre à déplacer le point d'injection 54A et à diriger le deuxième gaz sous pression vers au moins une zone prédéfinie de l'ébauche 38, comme détaillé par la suite.

Le dispositif 53 est propre à appliquer au deuxième gaz un profil de pressions, comme détaillé par la suite.

Le procédé de fabrication de l'article creux 10 au moyen de l'installation 16 va maintenant être décrit.

Au cours d'une première étape du procédé, le distributeur 18 délivre à sa sortie la paraison 32 qui, de manière classique, est coupée par des ciseaux, non représentés. A l'issue de cette étape, à la sortie du distributeur 18, la paraison 32 tombe dans un conduit 58 qui la conduit dans l'entonnoir 36, puis dans l'empreinte 34 du moule ébaucheur 20.

Au cours d'une étape suivante, l'ébauche 38 est démoulée et transférée par le bras manipulateur 24 depuis le moule ébaucheur 20 jusqu'au moule finisseur 26. L'ébauche 38 est introduite par le bras manipulateur 24 à l'intérieur de l'empreinte 40 du moule finisseur 26, comme représenté sur la figure 2.

Le couvercle 43 est ensuite refermé, lors d'une étape suivante, sur la partie supérieure de l'empreinte 40, obturant ainsi l'empreinte 40. Le support 44 de la tête de soufflage 28 est alors rapporté sur le couvercle 43, comme représenté sur la figure 3. Au cours de cette même étape, la buse 52 injecte le deuxième gaz à une première pression, dite pression de formation, la buse 52 étant dans sa position rétractée. Cette injection du deuxième gaz à une pression de formation permet d'augmenter le volume de l'ébauche 38 jusqu'à ce que celle-ci atteigne les parois et le fond du moule finisseur 26, afin de former la répartition extérieure de verre de l'article 10. L'injection d'un gaz à une pression de formation est classique et nécessaire pour former l'article 10.

La buse 52 est ensuite arrêtée et le système mécanique déplace la buse d'injection 52 depuis sa position rétractée jusqu'à sa position insérée, dans le sens de la flèche F1 représentée sur la figure 3. La buse 52 injecte alors, dans sa position insérée, le deuxième gaz à une deuxième pression, dite pression de finition, vers au moins une zone prédéfinie de l'ébauche 38, pour former une répartition intérieure 12 du verre de l'article spécifique. Le point d'injection 54A du deuxième gaz sous pression est ainsi déplacé par la buse 52, depuis la position rétractée de la buse jusqu'à sa position insérée. Dans l'exemple de réalisation, la valeur de la pression de finition est différente de la valeur de la pression de formation. La valeur de la pression de formation est, par exemple, comprise entre 0 bars et 3 bars. La valeur de la pression de finition est, par exemple, comprise entre 3 bars et 7 bars. En variante, la valeur de la pression de finition est égale à la valeur de la pression de formation.

En variante ou en complément, la buse 52 injecte en outre, tout le long de son déplacement entre ses positions rétractée et insérée, le deuxième gaz à la pression de finition vers certaines zones discrètement réparties de l'ébauche 38. Par zone discrètement répartie, on entend une zone limitée de la paroi interne de l'article 10, dans laquelle on souhaite conférer une forme particulière à la paroi interne. Au cours de cette injection du deuxième gaz à la pression de finition, via la buse 52, on applique avantageusement au deuxième gaz, via le dispositif 53, un profil de pressions. Le profil de pressions s'étend entre une pression minimale par exemple sensiblement égale à 3 bars, et une pression maximale par exemple sensiblement égale à 7 bars. La pression de finition varie donc au cours du déplacement de la buse 52. La pression de finition ne varie pas nécessairement de façon linéaire entre la pression minimale et la pression maximale ; elle peut varier de sorte à présenter des pics de pression en certains endroits prédéterminés du déplacement de la buse 52 en fonction de la forme que l'on souhaite conférer à la paroi interne. La buse d'injection 52 permet d'injecter le deuxième gaz à une pression de finition variable en certaines zones réparties sur la hauteur de l'article creux 10, c'est-à-dire selon l'axe longitudinal A-A'.

En variante encore, l'étape d'injection par la buse 52 du deuxième gaz à la pression de formation et l'étape d'injection par la buse 52 du deuxième gaz à la pression de finition le long de son déplacement entre ses positions rétractée et insérée sont effectuées simultanément. Selon cette variante, le deuxième gaz injecté par la buse 52, tout le long de son déplacement entre ses positions rétractée et insérée, permet simultanément d'augmenter le volume de l'ébauche 38 jusqu'à ce que celle-ci atteigne les parois et le fond du moule finisseur 26 et de former une répartition intérieure 12 du verre de l'article spécifique, par déplacement du point d'injection 54A. Selon cette variante on applique également avantageusement au deuxième gaz un profil de pressions.

Avantageusement, au cours de l'étape d'injection du deuxième gaz, on évacue par l'ouverture d'évacuation 47A, par exemple périodiquement, une partie du deuxième gaz vers l'extérieur du moule finisseur 26. Ceci permet d'obtenir une répartition intérieure 12 de verre homogène et reproductible industriellement. Dans la variante selon laquelle la tête de soufflage 28 ne comporte pas d'ouverture d'évacuation 47, l'évacuation du deuxième gaz vers l'extérieur du moule finisseur 26 est par exemple effectuée via un jeu entre la buse 52 et l'orifice d'insertion de la buse 52 dans le moule finisseur 26, dans la position insérée de la buse.

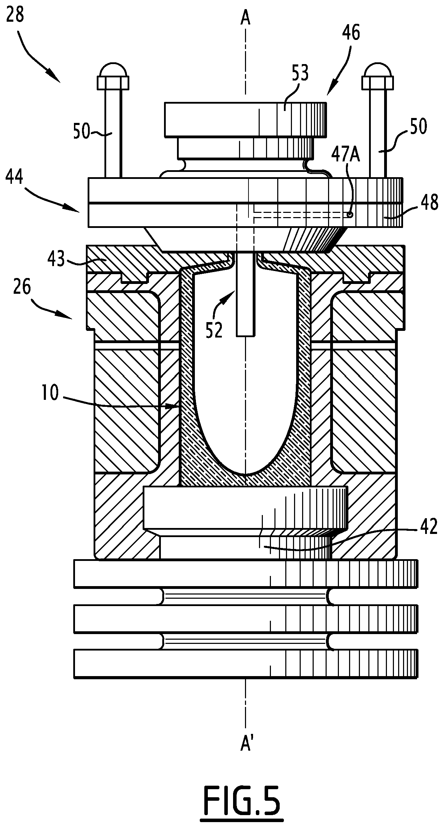

A l'issue de cette étape d'injection du deuxième gaz, on obtient l'article creux 10 non démoulé, comme représenté à la figure 5. L'article creux est ensuite démoulé du moule finisseur 26 en retirant le fond amovible 42. L'article creux 10 obtenu à l'issue du procédé de fabrication est représenté à la figure 6. Dans l'exemple de réalisation, l'article creux 10 présente une répartition intérieure 12 de verre sensiblement concave.

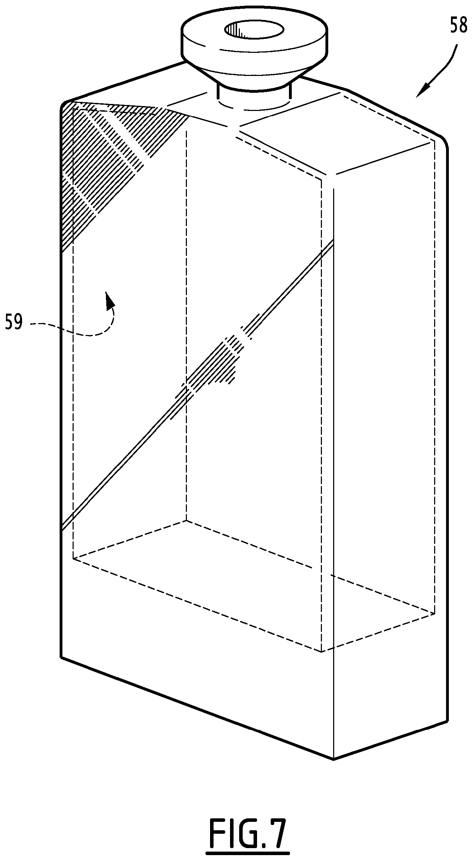

Sur la figure 7 est représenté un article creux 58 obtenu par un procédé de fabrication de l'art antérieur. L'article creux 58 présente une répartition intérieure 59 de verre standard, selon un modèle « plat ». Par comparaison avec l'article creux 58 de l'art antérieur, l'article creux 10 obtenu par le procédé selon l'invention présente de manière surprenante une répartition intérieure 12 de verre spécifique. La répartition intérieure 12 de l'article creux 10 présente le même poids de verre que la répartition intérieure 59 de l'article creux 58. La partie concave de la répartition intérieure 12 de l'article creux 10 est formée dans une région analogue à celle dans laquelle s'étend l'épaisseur de verre du fond de l'article creux 58.

On conçoit ainsi que l'installation de fabrication 16 et le procédé de fabrication décrits ci-dessus permettent d'obtenir un article creux présentant une répartition intérieure de verre spécifique et personnalisable, tout en conservant des cadences de production acceptables. En effet, on comprend qu'en faisant varier la pression et le deuxième gaz appliqué en certaines zones de l'article creux, le deuxième gaz « creusera » ou « poussera » plus ou moins le verre présent dans ces zones, ce qui permettra de former des creux ou des reliefs dans ces zones en faisant varier l'épaisseur de verre entre la paroi interne et la paroi externe de ces zones.

Une buse d'injection 60 d'une deuxième installation 62 de fabrication de l'article creux 10 est représentée sur la figure 8. Sur cette figure, les éléments analogues au premier mode de réalisation décrit précédemment sont repérés par des références identiques.

De manière analogue à la buse d'injection 52 de la première installation 16, la buse d'injection 60 s'étend selon un axe longitudinal A-A' et est montée mobile en translation longitudinale par rapport au support 44.

A la différence de la buse d'injection 52, la buse d'injection 60 est en outre montée, dans sa position insérée, mobile en rotation autour de son axe longitudinal A-A'. Le système mécanique de déplacement de l'organe d'injection 46 est propre en outre à entraîner la buse d'injection 60 en rotation autour de son axe longitudinal A-A'. Par ailleurs, à la différence de la buse d'injection 52, la buse d'injection 60 comprend en outre un deuxième orifice 54C de sortie du deuxième gaz sous pression à l'intérieur du moule finisseur 26. Le deuxième orifice 54C s'étend sur une paroi latérale de la buse 60 et est par exemple de forme allongée. Le deuxième orifice 54C forme un point d'injection du deuxième gaz sous pression à l'intérieur du moule finisseur 26.

En variante, la buse d'injection 60 comprend au moins un orifice de sortie 54 s'étendant à l'extrémité aval ou sur une paroi latérale de la buse d'injection 60. L'homme du métier comprendra bien sûr que dans le cas où la buse d'injection 60 comprend au moins deux orifices de sortie 54, les orifices de sortie 54 présentent avantageusement des formes et/ou des diamètres différents. Dans ce cas, chaque orifice de sortie 54 s'étend à l'extrémité aval ou sur une paroi latérale de la buse d'injection 60.

Au cours de l'étape d'injection du deuxième gaz, à la pression de finition, dans la position insérée de la buse 60, la buse 60 est mise en rotation autour de son axe longitudinal A-A', de sorte à diriger le deuxième gaz vers certaines zones discrètement réparties de l'ébauche 38. Ces zones additionnelles constituent des zones de formation de répartitions intérieures de verre spécifiques, différentes des répartitions intérieures de verre obtenues par la première installation de fabrication 16. Le deuxième point d'injection 54C du deuxième gaz sous pression est ainsi déplacé par la buse 60, autour de son axe longitudinal A-A'.

La buse d'injection 60 permet d'injecter le deuxième gaz à une pression de finition variable en certaines zones réparties sur la circonférence de l'article creux 10, c'est-à-dire selon un plan transversal. La deuxième installation de fabrication 62 et le procédé de fabrication associé permettent ainsi d'obtenir une plus grande variété de répartitions intérieures de verre spécifiques pour l'article creux 10.

Le reste du fonctionnement de ce deuxième mode de réalisation est analogue au fonctionnement du premier mode de réalisation, et n'est donc pas décrit à nouveau.

L'invention ne se limite pas à ces modes de réalisation spécifiques. En particulier, dans un autre mode de réalisation, non représenté, la buse d'injection n'est plus mobile en translation longitudinale par rapport au support 44. Dans ce mode de réalisation, la buse d'injection est uniquement mobile en rotation autour de son axe longitudinal A-A'.

Bien entendu, l'homme du métier comprendra que toutes les combinaisons décrites précédemment, concernant le nombre, la position, le diamètre et la forme des orifices de sortie, sont également envisageables pour la buse d'injection selon ce mode de réalisation.

Selon un autre mode de réalisation, non représenté, la buse d'injection est fixe et le moule finisseur est monté mobile en rotation autour de l'axe longitudinal A-A'.

Selon un autre mode de réalisation, non représenté, la buse d'injection et le moule finisseur sont montés mobiles en rotation autour de l'axe longitudinal A-A'.

Ces deux derniers modes de réalisation permettent d'obtenir des répartitions intérieures de verre supplémentaires pour l'article creux. Par ailleurs, l'invention s'applique de la même manière à toute buse d'injection présentant les caractéristiques précitées, quel que soit sa longueur ou son diamètre.

Grâce à l'invention qui vient d'être décrite, on conçoit que l'installation et le procédé de fabrication selon l'invention permettent d'obtenir un article creux présentant une répartition intérieure de verre spécifique et personnalisable. En effet, en jouant sur les mouvements de translation et/ou de rotation de la buse d'injection, sur la longueur et le diamètre de la buse, sur le diamètre de l'éventuelle ouverture d'évacuation, ainsi que sur le nombre, la forme et le diamètre des orifices de sortie de la buse, et les différentes combinaisons possibles entre ces caractéristiques, on peut obtenir un nombre élevé de répartitions intérieures spécifiques possibles pour l'article creux et ainsi « sculpter » comme on le souhaite l'intérieur de l'article. Plus particulièrement, la buse peut présenter une forme différente de la forme cylindrique classique, tout en permettant l'insertion de la buse à l'intérieur du moule finisseur et de l'ébauche de l'article. En particulier, une forme ondulée ou parallélépipédique est envisageable pour la buse. Ces différentes formes possibles pour la buse permettent ainsi d'obtenir d'autres répartitions intérieures spécifiques pour l'article creux.

Le dispositif d'application d'un profil de pressions permet par ailleurs d'augmenter encore le nombre de répartitions intérieures spécifiques possibles, en jouant sur les variations de pressions du deuxième gaz injecté.

La description a été faite en référence à une injection d'air sous pression pour former l'article creux en verre dans le moule finisseur. Il est cependant entendu que l'invention s'applique de la même manière à l'injection d'un gaz sous pression différent de l'air, ou encore à l'injection conjointe, par la buse d'injection, d'un gaz et d'un produit non gazeux, par exemple pour réaliser un thermolustrage intérieur du verre.

A la lecture des modes de réalisation précédents, on comprend que la buse d'injection du gaz est apte à déplacer le ou chaque point d'injection 54A, 54C par rapport à l'ébauche 38. Ainsi, au cours de la formation de l'article 10 dans le moule finisseur 26, le ou chaque point d'injection 54A, 54C du deuxième gaz sous pression est déplacé par la buse, par rapport à l'ébauche 38.

## Revendications

1. Procédé de fabrication d'un article (10) creux en verre, procédé dans lequel :
- on introduit une ébauche (38) de l'article (10) dans un moule finisseur (26), et
- on forme dans le moule finisseur (26) l'article (10), par injection au moins d'un gaz à une pression de formation à l'intérieur de l'ébauche (38) de l'article (10),
**caractérisé en ce que**, au cours de la formation de l'article (10) dans le moule finisseur (26), on déplace au moins un point (54A ; 54C) d'injection du gaz pour diriger le gaz vers au moins une zone prédéfinie de l'ébauche (38), le gaz étant injecté au moins à une pression de finition particulière en ladite zone prédéfinie pour conférer à ladite zone prédéfinie une forme particulière et obtenir un article (10) dont l'intérieur est sculpté, et pour former une répartition intérieure (12) du verre de l'article (10) spécifique.

2. Procédé selon la revendication 1, **caractérisé en ce que**, au cours de la formation de l'article (10) dans le moule finisseur (26), on déplace au moins deux points (54A ; 54C) d'injection du gaz, l'un des points d'injection (54A ; 54C) s'étendant sur une paroi latérale d'une buse d'injection (52), l'autre des points d'injection (54A ; 54C) s'étendant à une extrémité aval ou sur ladite paroi latérale de la buse d'injection (52).

3. Procédé selon la revendication 1 ou 2, **caractérisé en ce que**, au cours de la formation de l'article (10) dans le moule finisseur (26), on déplace par translation longitudinale le ou chaque point (54A ; 54C) d'injection du gaz pour diriger le gaz vers certaines zones discrètement réparties de l'ébauche (38), au moins entre une première position d'injection du gaz à l'intérieur de l'ébauche (38) et une deuxième position d'injection du gaz à l'intérieur de l'ébauche (38).

4. Procédé selon l'une quelconque des revendications 1 à 3, **caractérisé en ce que**, au cours de la formation de l'article (10) dans le moule finisseur (26), on déplace par rotation le ou chaque point (54C) d'injection du gaz pour diriger le gaz vers certaines zones discrètement réparties de l'ébauche (38).

5. Procédé selon l'une quelconque des revendications précédentes, **caractérisé en ce que**, au cours de la formation de l'article (10) dans le moule finisseur (26), on évacue une partie du gaz injecté vers l'extérieur du moule finisseur (26).

6. Procédé selon l'une quelconque des revendications précédentes, **caractérisé en ce que**, au cours de la formation de l'article (10) dans le moule finisseur (26), on applique au gaz injecté au moins à la pression de finition un profil de pressions s'étendant entre une pression minimale sensiblement égale à 3 bars et une pression maximale sensiblement égale à 7 bars.

7. Procédé selon l'une quelconque des revendications précédentes, **caractérisé en ce que**, au cours de la formation de l'article (10) dans le moule finisseur (26), on déplace le ou chaque point (54A ; 54C) d'injection du gaz par rapport à l'ébauche (38).

8. Installation (16 ; 62) de fabrication d'un article creux (10) en verre, ladite installation (16 ; 62) comprenant :
- des moyens (24) d'introduction d'une ébauche (38) de l'article (10) dans une empreinte (40) d'un moule finisseur (26), et
- des moyens (28, 46, 52 ; 60) de formation dans le moule finisseur (26) de l'article (10), lesdits moyens de formation (28, 46, 52 ; 60) étant propres à injecter au moins un gaz à une pression de formation à l'intérieur de l'ébauche (38) de l'article (10),
les moyens de formation (28, 46, 52 ; 60) comprenant des moyens (52 ; 60) de déplacement d'au moins un point (54A ; 54C) d'injection du gaz, les moyens de déplacement (52 ; 60) étant aptes à diriger le gaz vers au moins une zone prédéfinie de l'ébauche (38),
les moyens de déplacement (52 ; 60) comprenant une buse (52 ; 60) d'injection au moins du gaz vers au moins une zone prédéfinie de l'ébauche (38), la buse d'injection (52 ; 60) s'étendant selon un axe longitudinal (A-A') et comprenant au moins un orifice (54A ; 54C) de sortie du gaz à l'intérieur du moule finisseur (26), le ou chaque orifice (54A ; 54C) formant un point d'injection du gaz apte à être déplacé par la buse (52 ; 60).
**caractérisée en ce que** la buse d'injection (52) comprend au moins deux orifices (54A ; 54C) de sortie du gaz sous pression à l'intérieur du moule finisseur (26),
l'un des orifices de sortie (54A ; 54C) s'étendant sur une paroi latérale de la buse d'injection (52),
l'autre des orifices de sortie (54A ; 54C) s'étendant à une extrémité aval ou sur ladite paroi latérale de la buse d'injection (52),
le gaz étant injecté au moins à une pression de finition pour former une répartition intérieure (12) du verre de l'article spécifique.

9. Installation (16 ; 62) selon la revendication 8, **caractérisée en ce que** la buse d'injection (52 ; 60) est montée mobile en translation longitudinale au moins entre une première position d'injection du gaz à l'intérieur de l'ébauche (38), et une deuxième position d'injection du gaz à l'intérieur de l'ébauche (38).

10. Installation (62) selon la revendication 8 ou 9, **caractérisée en ce que** la buse d'injection (60) est montée mobile en rotation autour de son axe longitudinal (A-A').

11. Installation (62) selon l'une des revendications 8 à 10, **caractérisée en ce que** lesdits au moins deux orifices (54A, 54C) présentant des formes et/ou des diamètres différents.

12. Installation (16 ; 62) selon l'une des revendications 8 à 11, **caractérisée en ce que** les moyens de formation (28) comprennent au moins une ouverture (47A) d'évacuation du gaz vers l'extérieur du moule finisseur (26).

13. Installation (16 ; 62) selon l'une des revendications 8 à 12, **caractérisée en ce qu'**elle comprend en outre des moyens (53) d'application d'un profil de pressions au gaz injecté au moins à la pression de finition, ledit profil de pressions s'étendant entre une pression minimale sensiblement égale à 3 bars et une pression maximale sensiblement égale à 7 bars.

14. Installation (16 ; 62) selon l'une des revendications 8 à 13, **caractérisée en ce que** les moyens (52 ; 60) de déplacement d'au moins un point (54A ; 54C) d'injection du gaz sont aptes en outre à déplacer le ou chaque point d'injection (54A ; 54C) par rapport à l'ébauche (38).

## Patentansprüche

1. Verfahren zum Herstellen eines hohlen Artikels (10) aus Glas, Verfahren wobei:
- man einen Rohling (38) des Artikels (10) in eine Endbearbeitungsform (26) einführt und
- man in der Endbearbeitungsform (26) den Artikel (10) formt, mittels Einspritzens von mindestens einem Gas mit einem Formen-Druck in das Innere des Rohlings (38) des Artikels (10),
**dadurch gekennzeichnet, dass** man, im Laufe des Formens des Artikels (10) in der Endbearbeitungsform (26), mindestens einen Punkt (54A, 54C) des Einspritzens des Gases bewegt, um das Gas zu mindestens einer vordefinierten Zone des Rohlings (38) zu leiten, wobei das Gas zumindest mit einem spezifischen Endbearbeitungsdruck in die besagte vordefinierte Zone eingespritzt wird, um der besagten vordefinierten Zone eine spezifische Form zu verleihen und einen Artikel (10) zu erhalten, dessen Inneres geformt ist, und um eine spezifische innere Verteilung (12) des Glases des Artikels (10) zu bilden.

2. Verfahren gemäß Anspruch 1, **dadurch gekennzeichnet, dass** man, im Laufe des Formens des Artikels (10) in der Endbearbeitungsform (26), mindestens zwei Punkte (54A, 54C) des Einspritzens des Gases bewegt, wobei sich einer der Einspritzpunkte (54A, 54C) auf einer Seitenwand einer Einspritzdüse (52) erstreckt, und wobei sich der andere der Einspritzpunkte (54A, 54C) an einem stromabwärtigen Ende oder auf der besagten Seitenwand der Einspritzdüse (52) erstreckt.

3. Verfahren gemäß Anspruch 1 oder 2, **dadurch gekennzeichnet, dass** man, im Laufe des Formens des Artikels (10) in der Endbearbeitungsform (26), mittels Längsverschiebung den oder jeden Punkt (54A, 54C) des Einspritzens des Gases bewegt, um das Gas zu bestimmten diskret verteilten Zonen des Rohlings (38) zu leiten, zumindest zwischen einer ersten Position des Einspritzens des Gases in das Innere des Rohlings (38) und einer zweiten Position des Einspritzens des Gases in das Innere des Rohlings (38).

4. Verfahren gemäß irgendeinem der Ansprüche 1 bis 3, **dadurch gekennzeichnet, dass** man, im Laufe des Formens des Artikels (10) in der Endbearbeitungsform (26), mittels Drehens den oder jeden Punkt (54C) des Einspritzens des Gases bewegt, um das Gas zu bestimmten diskret verteilten Zonen des Rohlings (38) zu leiten.

5. Verfahren gemäß irgendeinem der vorherigen Ansprüche, **dadurch gekennzeichnet, dass** man, im Laufe des Formens des Artikels (10) in der Endbearbeitungsform (26), einen Teil des eingespritzten Gases zum Äußeren der Endbearbeitungsform (26) ableitet.

6. Verfahren gemäß irgendeinem der vorherigen Ansprüche, **dadurch gekennzeichnet, dass** man, im Laufe des Formens des Artikels (10) in der Endbearbeitungsform (26), auf das Gas, welches zumindest mit dem Endbearbeitungsdruck eingespritzt wird, ein Profil von Drücken anwendet, welches zwischen einem minimalen Druck, welcher im Wesentlichen gleich 3 bar ist, und einem maximalen Druck, welcher im Wesentlichen gleich 7 bar ist, liegt.

7. Verfahren gemäß irgendeinem der vorherigen Ansprüche, **dadurch gekennzeichnet, dass** man, im Laufe des Formens des Artikels (10) in der Endbearbeitungsform (26), den oder jeden Punkt (54A, 54C) des Einspritzens des Gases mit Bezug auf den Rohling (38) bewegt.

8. Anordnung (16, 62) zum Herstellen eines hohlen Artikels (10) aus Glas, wobei die besagte Anordnung (16, 62) aufweist:
- Mittel (24) zum Einbringen eines Rohlings (38) des Artikels (10) in eine Vertiefung (40) einer Endbearbeitungsform (26) und
- Mittel (28, 46, 52, 60) zum Formen des Artikels (10) in der Endbearbeitungsform (26), wobei die besagten Mittel zum Formen (28, 46, 52, 60) imstande sind, zumindest ein Gas mit einem Formen-Druck in das Innere des Rohlings (38) des Artikels (10) einzuspritzen,
wobei die Mittel zum Formen (28, 46, 52, 60) Mittel (52, 60) zum Bewegen von mindestens einem Punkt (54A, 54C) des Einspritzens des Gases aufweisen, wobei die Mittel zum Bewegen (52, 60) imstande sind, das Gas zu mindestens einer vordefinierten Zone des Rohlings (38) zu leiten,
wobei die Mittel zum Bewegen (52, 60) eine Düse (52, 60) zum Einspritzen von zumindest einem Gas in zumindest eine vordefinierte Zone des Rohlings (38) aufweisen, wobei sich die Düse zum Einspritzen (52, 60) entlang einer Längsachse (A-A') erstreckt und zumindest eine Öffnung (54A, 54C) für das Austreten des Gases in das Innere der Endbearbeitungsform (26) aufweist, wobei die oder jede Öffnung (54A, 54C) einen Punkt des Einspritzens des Gases bildet, welcher imstande ist, mittels der Düse (52, 60) bewegt zu werden,
**dadurch gekennzeichnet, dass** die Düse zum Einspritzen (52) mindestens zwei Öffnungen (54A, 54C) für das Austreten des Gases unter Druck in das Innere der Endbearbeitungsform (26) aufweist,
wobei sich eine der Öffnungen für das Austreten (54A, 54C) auf einer Seitenwand der Einspritzdüse (52) erstreckt,
wobei sich die andere der Öffnungen für das Austreten (54A, 54C) an einem stromabwärtigen Ende oder auf der besagten Seitenwand der Einspritzdüse (52) erstreckt,
wobei das Gas zumindest mit einem Endbearbeitungsdruck eingespritzt wird, um eine spezifische innere Verteilung (12) des Glases des Artikels zu bilden.

9. Anordnung (16, 62) gemäß Anspruch 8, **dadurch gekennzeichnet, dass** die Einspritzdüse (52, 60) längsverschiebebeweglich zumindest zwischen einer ersten Position des Einspritzens des Gases in das Innere des Rohlings (38) und einer zweiten Position des Einspritzens des Gases in das Innere des Rohlings (38) montiert ist.

10. Anordnung (62) gemäß Anspruch 8 oder 9, **dadurch gekennzeichnet, dass** die Einspritzdüse (60) drehbeweglich um ihre Längsachse (A-A') montiert ist.

11. Anordnung (62) gemäß einem der Ansprüche 8 bis 10, **dadurch gekennzeichnet, dass** die besagten zumindest zwei Öffnungen (54A, 54C) unterschiedliche Formen und/oder Durchmesser haben.

12. Anordnung (16, 62) gemäß einem der Ansprüche 8 bis 11, **dadurch gekennzeichnet, dass** die Mittel zum Formen (28) zumindest eine Öffnung (47A) zum Ausleiten des Gases zum Äußeren der Endbearbeitungsform (26) aufweisen.

13. Anordnung (16, 62) gemäß einem der Ansprüche 8 bis 12, **dadurch gekennzeichnet, dass** sie ferner Mittel (53) zum Anwenden eines Profils von Drücken auf das Gas, welches zumindest mit dem Endbearbeitungsdruck eingespritzt wird, aufweist, wobei das besagte Profil von Drücken zwischen einem minimalen Druck, welcher im Wesentlichen gleich 3 bar ist, und einem maximalen Druck, welcher im Wesentlichen gleich 7 bar ist, liegt.

14. Anordnung (16, 62) gemäß einem der Ansprüche 8 bis 13, **dadurch gekennzeichnet, dass** die Mittel (52, 60) zum Bewegen von zumindest einem Punkt (54A, 54C) des Einspritzens des Gases ferner imstande sind, den oder jeden Punkt des Einspritzens (54A, 54C) bezüglich des Rohlings (38) zu bewegen.

## Claims

1. A method for manufacturing a hollow glass article (10), method wherein:
- a blank (38) of the article (10) is introduced into a finishing mold (26), and
- the article (10) is formed in the finishing mold (26), by a injecting at least one gas at a forming pressure inside the blank (38) of the article (10),
**characterized in that**, during formation of the article (10) in the finishing mold (26), at least one gas injection point (54A; 54C) is displaced so as to direct the gas towards at least one predefined area of the blank (38), the gas being injected at least at one particular finishing pressure in said predefined area in order to give a particular shape to said predefined area and obtain an article (10) the inside of which is sculpted, and in order to form a specific inner glass distribution (12) of the article.

2. Method according to claim 1, **characterized in that**, during the formation of the article (10) in the finishing mold (26), at least two gas injection points (54A; 54C) are displaced, one of the gas injection points (54A; 54C) extending on a side wall of an injection nozzle (52), the other of the gas injection points (54A; 54C) extending on a downstream end or on said side wall of the injection nozzle (52).

3. The method according to claim 1 or 2, **characterized in that**, during formation of the article (10) in the finishing mold (26), said or each gas injection point (54A; 54C) is displaced for directing the gas towards certain discretely distributed areas of the blank (38), at least between a first gas injection position inside the blank (38) and a second gas injection position inside the blank (38).

4. The method according to any one of claims 1 to 3, **characterized in that**, during the formation of the article (10) in the finishing mold (26), said or each gas injection point (54C) is displaced by rotation so as to direct the gas towards certain discretely distributed areas of the blank (38).

5. The method according to any of the preceding claims, **characterized in that**, during formation of the article (10) in the finishing mold (26), a portion of the injected gas is discharged towards the outside of the finishing mold (26).

6. The method according to any of the preceding claims, **characterized in that**, during formation of the article (10) in the finishing mold (26), at least at the finishing pressure, a pressure profile is applied extending between a minimum pressure substantially equal to 3 bars and a maximum pressure substantially equal to 7 bars.

7. The method according to any of the preceding claims, **characterized in that**, during formation of the article (10) in the finishing mold (26), said or each gas injection point (54A; 54C) is displaced relatively to the blank (38).

8. A facility (16; 62) for manufacturing a hollow glass article (10), said facility (16; 62) comprising:
- means (24) for introducing a blank (38) of the article (10) into an imprint (40) of a finishing mold (26), and
- means (28, 46, 52; 60) for forming the article (10) in the finishing mold (26), is said forming means (28, 46, 52; 60) being able to inject at least one gas at a forming pressure inside the blank (38) of the article (10),
the forming means (28, 46, 52; 60) comprising means (52; 60) for displacing at least one gas injection point (54A; 54C), the displacement means (52;60) being able to direct the gas is at least one predefined area of the blank (38),
the displacement means (52; 60) comprising a nozzle (52; 60) for injecting at least the gas towards at least one predefined area of the blank (38), the injection nozzle (52; 60) extending along a longitudinal axis (A-A') and comprising at least one outlet orifice (54A; 54C) for the gas inside the finishing mold (26), said or each orifice (54A; 54C) forming a gas injection point able to be displaced by the nozzle (52; 60),
**characterized in that** the injection nozzle (52) comprises at least two outlet orifices (54A; 54C) for the pressurized gas inside the finishing mold (26),
one of the gas injection points (54A; 54C) extending on a side wall of an injection nozzle (52),
the other of the gas injection points (54A; 54C) extending on a downstream end or on said side wall of the injection nozzle (52),
the gas being injected at least at a finishing pressure so as to form a specific inner glass distribution (12) of the article.

9. The facility (16; 62) according to claim 8, **characterized in that** the injection nozzle (52; 60) is mounted so as to be movable in longitudinal translation at least between a first gas injection position inside the blank (38), and a second gas injection position inside the blank (38).

10. The facility (62) according to claim 8 or 9, **characterized in that** the injection nozzle (60) is mounted so as to be movable in rotation around its longitudinal axis (A-A').

11. The facility (62) according to one of claims 8 to 10, **characterized in that** said at least two orifices (54A, 54C) have different shapes and/or diameters.

12. The facility (16; 62) according to one of claims 8 to 11, **characterized in that** the formation means (28) comprise at least the one aperture (47A) for discharging the gas towards the outside of the finishing mold (26).

13. The facility (16; 62) according to one of claims 8 to 12, **characterized in that** it further comprises means (53) for applying a pressure profile to the injected gas at least at the finishing pressure, said pressure profile extending between a minimum pressure substantially equal to 3 bars and a maximum pressure substantially equal to 7 bars.

14. The facility (16; 62) according to one of claims 8 to 13, **characterized in that** the means (52; 60) for displacing at least one gas injection point (54A; 54C) are further able to displace said or each injection point (54A; 54C) relatively to the blank (38).
